# EUROPÄISCHE PATENTSCHRIFT

(11) **EP 0 835 200 B1**
(45) Veröffentlichungstag und Bekanntmachung des Hinweises auf die Patenterteilung: **12.04.2000**
(21) Anmeldenummer: 96921982.3
(22) Anmeldetag: 13.06.1996
(51) Int. Cl.: B60S 1/34, B60S 1/52

(54) **VERSCHLUSSSTÜCK FÜR EIN METALLISCHES RÖHRCHEN**
CLOSURE PIECE FOR A SMALL METAL PIPE
PIECE DE FERMETURE POUR PETIT TUBE METALLIQUE

(30) Priorität: 29.06.1995 DE 19523589; 06.07.1995 DE 19524628; 27.12.1995 DE 19548820
(43) Veröffentlichungstag der Anmeldung: 15.04.1998
(73) Patentinhaber: ITT Automotive Europe GmbH, 60488 Frankfurt am Main (DE); Volkswagen Aktiengesellschaft, 38436 Wolfsburg (DE)
(72) Erfinder: WALTHER, Bernd, D-74321 Bietigheim-Bissingen (DE); HEUBERGER, Christof, D-71665 Vaihingen (DE); ERKENS, Horst, D-38518 Gifhorn (DE)
(74) Vertreter: Dreiss, Fuhlendorf, Steimle & Becker
(86) Internationale Anmeldenummer: EP9602557
(87) Internationale Veröffentlichungsnummer: WO9701468

(56) Entgegenhaltungen:
- DE-A- 4 028 127
- GB-A- 1 071 420
- US-A- 3 192 090

## Beschreibung

Die Erfindung bezieht sich auf ein Verschlußstück für ein metallisches Röhrchen gemäß dem Oberbegriff des Anspruchs 1.

Dieses Verschlußstück soll eine Düse tragen, mit der Waschwasser auf eine Fahrzeugscheibe aufgebracht werden kann. Das Röhrchen wird durch die Antriebsachse des Wischarmes geführt.

Das Verschlußstück soll nun das aus dem Achsstummel herausragende Ende des Röhrchens derart verschließen, daß das Wasser nicht in die Achsdurchführung gelangt.

Die DE 40 28 127 A1 offenbart eine Scheibenreinigungsanlage mit einer Wischerwelle, in welcher ein zentraler Führungszapfen mit einem Anschlußstück angeordnet ist. Dieser Führungszapfen mit Anschlußstück taucht in ein Röhrchen ein.

Der Erfindung liegt die Aufgabe zugrunde, ein Verschlußstück vorzuschlagen, das eine verbesserte Abdichtung besitzt.

Diese Aufgabe wird erfindungsgemäß mit einem Verschlußstück gelöst, das die Merkmale des Anspruchs 1 aufweist.

Das Verschlußstück weist also einen zentralen Führungszapfen auf, der koaxial von einem Ansatz umgeben ist, so daß sich zwischen Führungszapfen und Ansatz eine Ringnut ausbildet, in der der Mantel des Röhrchens einsteckbar ist.

Das Verschlußstück weist eine Längssackbohrung auf, deren Öffnung nach dem Aufsetzen des Verschlußstückes in das Röhrchen in dieses hineinweist.

Eine Queraufnahme nimmt einen Düsenkörper auf, wobei der Düsenkanal in die Sacklochbohrung hineinführt.

Im folgenden wird die Ausführung einer Getriebegehäuses für eine Wischanlage eines Kraftfahrzeuges beschrieben.

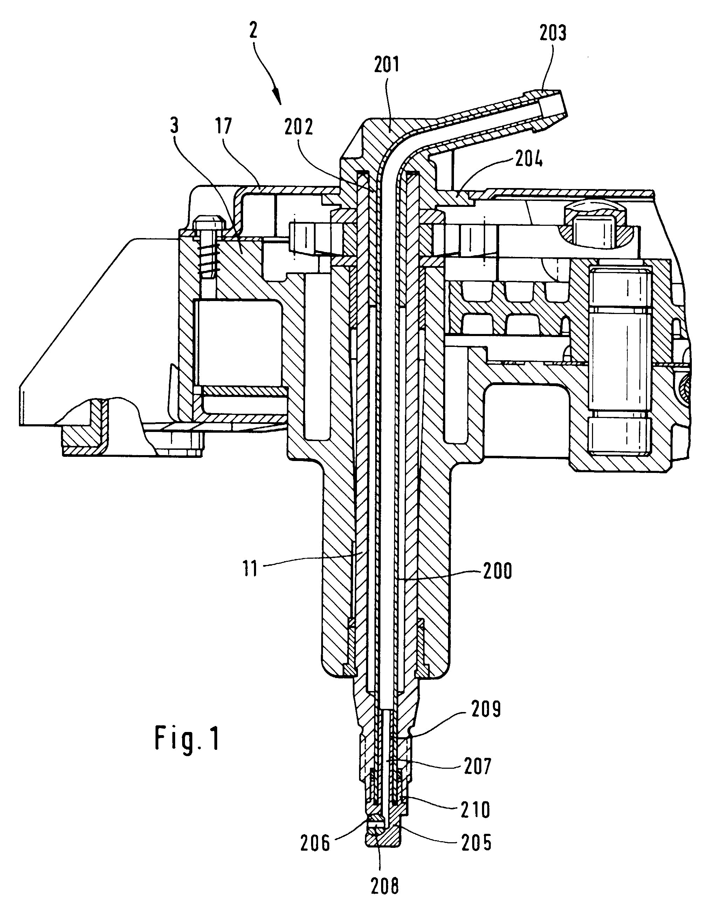

Fig. 1: Schnitt durch ein Getriebe mit Einzelheiten der Wasserdurchführung durch die Abtriebswelle.

Bei dem in der Figur gezeigten Getriebe 2 handelt es sich um ein sogenanntes Pendelgetriebe, welches eine in dem Gehäuse 3 gelagerte, und von Getriebebauteilen pendelnd angetriebene Abtriebswelle 11 aufweist. Es ist ferner eine Wasserzuführung durch die Abtriebswelle 11 vorgesehen. Dazu ist die Abtriebswelle 11 hohl ausgebildet. Die Zuleitung besteht im wesentlichen aus einem Messingröhrchen 200, das an einem Ende abgebogen ist. Dieser abgebogene Bereich wird von einem Halteteil 201 aus Kunststoff umgeben, der um das Röhrchen herumgespritzt wird. Das Halteteil 201 weist zunächst einen Führungsteil 202 auf, der in die Hohlwelle eingeschoben wird, und das Röhrchen 200 zentriert. Das andere Ende ist zu einer Tülle 203 ausgebildet, auf der ein Schlauch aufgeschoben werden kann. Der Grundkörper 204 ist mit Hinterschneidungen versehen, mit denen dieser in eine Öffnung im Deckel 17 bajonettartig eingesetzt werden kann. Das andere Ende des Röhrchens 200 ist mit einem Abschlußteil 205 versehen, das gleichzeitig als Träger für eine Metalldüse 206 dient. Dazu weist das Abschlußteil 205 eine Ausnehmung auf, in der die Düse 206, deren Außenkontur kugelförmig ist, eingedrückt werden kann. Die Düse 206 kann nun relativ zum Abschlußteil 205 ausgerichtet werden, so daß das Waschwasser in einen definierten Bereich auf der Scheibe auftrifft. Das Abschlußteil selbst ist mit einen zentralen Sackloch 207 versehen, der im Aufnahmebereich der Düse endet und in die die Düsenbohrung 208 einmündet.

Das Problem besteht nun darin, das Abschlußteil 205 so sicher am Röhrchen 200 zu befestigen, daß bei einer Verstellung der Düse 206, die Position des Abschlußteils selbst nicht geändert wird.

Dazu sieht das Abschlußteil 205 einen Führungszapfen 209 auf, der in das Metallröhrchen 200 eingesteckt werden kann, wobei der Außendurchmesser des Zapfens 209 in etwa dem Innendurchmesser des Röhrchens entspricht. Die Passung darf allerdings nicht zu eng sein, damit der röhrenförmige Zapfen 209 ohne auszuknicken in das Röhrchen eingeschoben werden kann.

Um eine Verdrehsicherung des Abschluß 205 zum Röhrchen zu erhalten, wird zusätzlich ein ringförmiger Ansatz 210 vorgesehen, der koaxial zum röhrenförmigen Zapfen 209 angeordnet ist, so daß zwischen dem Ansatz 210 und den röhrenförmigen Zapfen 209 eine Ringnut entsteht, deren Breite der Dicke der Rohrwand entspricht. Wird nun das Röhrchenende an seiner Außenseite ein wenig aufgerauht, angefräst oder in sonstiger Weise die Rauhigkeit der Oberfläche erhöht, so sitzt das Röhrchen mit ausreichender Klemmkraft in der Ringnut zwischen dem Ansatz 210 und dem Zapfen 209.

Die axiale Länge des Ansatzes 210 wird so bestimmt, daß eine ausreichende Klemmkraft erzeugt werden kann, die Länge des röhrenförmigen Zapfens 209 wird so bestimmt, daß eine ausreichende Dichtigkeit des Trägers 205 gegenüber dem Röhrchen bewirkt wird.

## Patentansprüche

1. Verschlußstück für ein durch eine hohle Antriebswelle (11), vorzugsweise einer Scheibenwaschanlage, ragendes metallisches Röhrchen (200), wobei das Verschlußstück (205) einen zentralen Führungszapfen (209) aufweist, den das Ende des Röhrchens (200) umgreift, dadurch **gekennzeichnet,** daß der Führungszapfen (209) koaxial von einem Ansatz (210) umgeben ist, so daß sich zwischen Führungszapfen und Ansatz eine Ringnut ausbildet, in die der Mantel des Röhrchens einsteckbar ist.

2. Verschlußstück nach Anspruch 1, dadurch **gekennzeichnet**, daß das Verschlußstück eine Längssackbohrung aufweist, deren Öffnung in das Röhrchen hineinweist.

3. Verschlußstück nach Anspruch 1, dadurch **gekennzeichnet**, daß das Verschlußstück eine Queraufnahme aufweist, die einen Düsenkörper aufnimmt, wobei der Düsenkanal in die Sacklochbohrung hineinführt.

4. Verschlußstück nach Anspruch 1, dadurch **gekennzeichnet**, daß an dem anderen Ende des Röhrchens (200) ein Halteteil (201) und ein Grundkörper (204) aus Kunststoff angeordnet ist.

5. Verschlußstück nach Anspruch 4, dadurch **gekennzeichnet**, daß das Halteteil (201) einen zentrischen Führungsteil (202) aufweist, welcher zwischen Abtriebswelle (11) und Röhrchen (200) angeordnet ist.

6. Verschlußstück nach Anspruch 5, dadurch **gekennzeichnet**, daß der Grundkörper (204) Hinterschneidungen aufweist, welche in zugeordnete Öffnungen des Deckels eingreifen.

7. Verschlußstück nach einem der Ansprüche 1 bis 6, dadurch **gekennzeichnet**, daß es in eine Wischeranordnung eines Kraftfahrzeuges einsetzbar ist.

8. Verschlußstück nach einem der vorangegangenen Ansprüche, dadurch **gekennzeichnet**, daß das dem Verschlußstück zugewandte Ende der Antriebswelle (11) in einen ringförmigen Vorsprung ausläuft, welcher die äußere Mantelfläche des Ansatzes (210) umfaßt.

## Claims

1. A closure piece for a metallic tubelet (200) penetrating a hollow drive shaft (11), preferably of a washing device for a windshield, wherein the closure piece (205) has a central guide peg (209), which the end of the tubelet (200) encircles, characterized in that, the guide peg (209) is coaxially encircled by a stud (210), so that an annular groove, in which the casing of the tubelet can be inserted, is formed between the guide peg and the stud.

2. A closure piece according to claim 1, characterized in that, the closure piece has a longitudinal blind boring, the opening of which points into the tubelet.

3. A closure piece according to claim 1, characterized in that, the closure piece has a transverse mount, which accommodates a nozzle body, whereby the nozzle channel penetrates into the blind bore boring.

4. A closure piece according to claim 1, characterized in that, a holding part (201) and a base body (204) made of plastic is provided at the other end of the tubelet (200).

5. A closure piece according to claim 4, characterized in that, the holding part (201) is provided with a centrally guide part (202) which is located between the drive shaft (11) and the tubelet (200).

6. A closure piece according to claim 5, characterized in that, the base body (204) is provided with undercuts which engage openings associated to the cover.

7. A closure piece according to one of the claims 1 to 6, characterized in that, it is insertable into a wiper arrangement of a motor vehicle.

8. A closure piece according to one of the preceding claims, characterized in that, the end of the drive shaft (11) directed to the closure piece ends in a ringlike projection which encircles the outer casing surface of the stud (210).

## Revendications

1. Embout pour un petit tube métallique (200) s'étendant à travers un arbre d'entraînement creux (11), de préférence celui d'un système d'essuie-glace, l'embout (205) comportant un téton de guidage central (209) qu'entoure l'extrémité du petit tube (200),
caractérisé en ce que le téton de guidage (209) est entouré par un rebord coaxial (210), de sorte qu'entre le téton de guidage et le rebord, une gorge annulaire soit formée, dans laquelle peut s'emboîter l'enveloppe du petit tube.

2. Embout selon la revendication 1, caractérisé en ce que l'embout comporte un trou borgne longitudinal dont l'embouchure est dirigée vers l'intérieur du petit tube.

3. Embout selon la revendication 1, caractérisé en ce que l'embout comporte un logement transversal recevant un corps de gicleur, le trou du gicleur débouchant dans ledit trou borgne.

4. Embout selon la revendication 1, caractérisé en ce qu'un élément de maintien (201) et un corps de base (204) en matière plastique sont disposés à l'autre extrémité du petit tube (200).

5. Embout selon la revendication 4, caractérisé en ce que l'élément de maintien (201) comporte une partie centrée de guidage (202) qui est disposée entre l'arbre de sortie (11) et le petit tube (200).

6. Embout selon la revendication 5, caractérisé en ce que le corps de base (204) comporte des contre-dépouilles qui s'engagent dans des évidements correspondants ménagés dans le couvercle.

7. Embout selon l'une des revendications 1 à 6, caractérisé en ce qu'il peut être installé dans un système d'essuie-glace d'un véhicule automobile.

8. Embout selon l'une des revendications précédentes, caractérisé en ce que l'extrémité de l'arbre d'entraînement (11), qui est tournée vers l'embout, se termine dans un prolongement annulaire qui entoure la surface enveloppante du rebord (210)
